# EUROPEAN PATENT SPECIFICATION

(11) **EP 2 404 057 B1**
(45) Date of publication and mention of the grant of the patent: **08.05.2019**
(21) Application number: 10707902.2
(22) Date of filing: 09.03.2010
(51) Int. Cl.: F03D 3/06

(54) **VERTICAL AXIS WIND TURBINE**
WINDTURBINE MIT VERTIKALER ACHSE
ÉOLIENNE À AXE VERTICAL

(30) Priority: 09.03.2009 GB 0904029
(43) Date of publication of application: 11.01.2012
(73) Proprietor: Windjoule Ltd, St. Albans, Hertfordshire AC1 2BS (GB)
(72) Inventor: MORRIS, Robert Fraser, Hertfordshire AL1 2BS (GB)
(74) Representative: Slingsby Partners LLP
(86) International application number: PCT/EP2010/052993
(87) International publication number: WO 2010/103013

(56) References cited:
- DE-A1- 19 638 347
- DE-U1-202008 006 980
- FR-A- 540 423
- FR-A1- 2 494 781
- FR-E- 23 889
- US-A- 4 408 955
- US-A- 4 681 512
- US-A1- 2003 235 498
- US-A1- 2004 164 561
- US-A1- 2006 188 364

## Description

This invention relates to a vertical axis wind turbine. The invention is applicable for use in generating electricity.

Wind turbines have increasingly been used to convert wind energy to electrical energy. The turbines can either be horizontal axis turbines, which need to face directly into the wind in order to best achieve rotation of the turbine; or vertical axis turbines which have the advantage that they will rotate regardless of the direction of the wind. The present invention relates to a vertical axis wind turbine which may be used to generate electricity.

Previous disclosures of vertical axis wind turbines include FR2494781. This document describes a vertical axis wind turbine that has three horizontal radial arms. At the end of each arm a vertical vane is mounted. These vertical vanes can pivot and have a limit on their rotational motion. The pivot point on the vertical vane is near one end of the vane. The pivot motion of the vane is used to allow the vane to self-orientate based on the direction of wind flow. This self-orientation is limited by limit of rotational motion. Due to this limit on the rotation, the vane presents a surface to catch the wind during part of the precession of the turbine. During another part of the precession the vane is self-orientating, the placement of the pivot point near one end of the vane means that maximum turning force is generated on the vane at this point. The inventor of the present invention has identified that generating such a large turning force can be a disadvantage in wind turbines of this type. Such a large force can cause a considerable shock to the radial arm when the vane reaches the limit on rotation, which can require the arm and the vane to be reinforced, increasing weight and reducing efficiency.

Another disclosure of a vertical axis wind engine is presented in US2003/0235498. This document discusses the difference between drag-based vertical axis wind engines and lift-based vertical axis wind engines. Drag-based being engines use flat panels, such as those described in FR2494781, for the vanes that catch the wind. Lift-based engines use airfoils as the vanes. US2003/0235498 teaches that there has been a progression from drag-based, flat panel wind engines to the use of airfoils in a lift-based system. This document describes a configuration of the airfoils in such a lift-based system. It discusses that the airfoils need to be balanced such that the pivot point is at the average centre of pressure/lift. Furthermore, lift-based turbines require relatively complex vanes, which can increase cost and weight.

DE202008006980U describes a wind turbine that has four pivot wings which are each attached to the wind turbine's supporting structure by a horizontal pivot axis. Each pivot wing can rotate from a position where the pivot wings are in a vertical position and to a position where the pivot wings are in a horizontal position where they offer low resistance to the wind flow. The pivot wings adopt the horizontal position when the rotational movement of the wind turbine means that they are moving against the wind flow. To enable the pivot wings to move to the horizontal position when moving against the wind flow, this document describes two bars which connect oppositely positioned pivot wings.

It would be desirable to produce a simple but efficient vertical axis wind turbine that addresses one or more of the problems discussed herein.

According to a first aspect of the invention there is provided a turbine head comprising a rotatable member; a plurality of laminar blades each including a surface, the blades being rotatably mounted to the rotatable member such that the blades can each rotate relative to the rotatable member from a first position to a second position, the angle between the first and second positions being less than 180 degrees; wherein each blade is rotatably mounted to the rotatable member about an axis that is near the centre of the blade such that, if a force is applied to the blade in a direction that is perpendicular to the surface, the difference in force between the force exerted on a portion of the surface on one side of the axis and the force exerted on a portion of the surface extending to the other side of the axis is sufficient to cause the blade to rotate from the first position towards the second position.

The surface area of the portion of the surface of the blade on one side of the axis may be greater than the surface area of the surface on the other side of the axis.

Each blade may be rotatably mounted at a point between the centre of the blade and a point one-quarter of the length of the blade in from the end of the blade. Each blade may rotatably mounted at a point one-sixth of the length of the blade from the centre of the blade.

The surface of each blade may have a concave profile. Each blade may comprise a blade frame and a blade covering, the blade frame may form the outer edges of the blade and the covering may form the surface of each blade. The blade covering may comprise a flexible material.

The angle between the first and second positions may be between seventy five and one hundred and five degrees.

The turbine head may further comprise a first stop means that limits the degree of rotation of the blade and, optionally, a second stop means to further limit the degree of rotation of the blade. The stop means may be a projection extending from the rotatable member; a tether between a fixed point and a point on the blade; or a part of the rotatable member or any other suitable means for limiting rotation of the blade.

The stop means may limit the degree of rotation of the blade about the mounting point to an angle between approximately seventy five and approximately one hundred and five degrees. Preferably, the degree of rotation of the blade about the mounting point is limited to ninety degrees where the first position is coplanar with the body and the second position is perpendicular to the body.

The turbine head may be provided with a shock absorber to minimise the impact imparted by the blade upon the stop means when they come into contact.

When the first or second stop means comprises the projection extending from the rotatable member or a part of the rotatable member the shock absorber may be a surface made from a resilient material situated on the projection, the part of the rotatable member or part of the blade coming into contact with the projection or the part of the rotatable member.

Alternatively, when the first or second stop means comprises a tether between a fixed point and a point on the blade wherein the shock absorber comprises the tether made from a resilient material.

The resilient material may be rubber, a synthetic equivalent of rubber or any other material which has elastomeric properties.

Alternatively, the shock absorber may comprise a resilient spring mechanism located on the blade or the rotatable member.

Optionally, the head includes means to fix the blade at a point of its rotation. The rotatable member may also include a plurality of turbine vanes and at least one of each of the plurality of blades may be mounted to a respective one of the turbine vanes. The means to fix the blade may comprise means to fix the blade at a direction that is perpendicular to the vane or means to fix the blade comprises means to hold the blade in a direction that is coplanar to the vane or means to fix the blade in either direction.

The blade may be mounted at an asymmetric point along the width of the blade or at a point such that the surface area of the portion of the surface area of the blade on one side of the mounting point is greater than the surface area of the surface extending the other side of the mounting point.

Advantageously, the blade is made from any one of: rigid plastics material, sail cloth, carbon fibre and metal. The metal may be, for example steel or aluminium.

The blade may also have a planar shape or a shape including a scoop at one end of the blade.

The turbine vanes may include an elongate portion and a frame portion at one end of the elongate portion, the blade being mounted within the frame portion. Alternatively the turbine vanes may include a pair of arms the blade being mounted at one point to one arm of the pair of arms and at another point to the other arm of the pair of arms.

According to another aspect of the present invention there is provided a turbine head for a vertical axis wind turbine as described above.

According to another aspect of the present invention there is provided a vertical axis wind turbine including a turbine head rotatably mounted upon a support, the turbine head as described above.

The vertical axis wind turbine may be provided with a braking means to limit the speed of rotation of the turbine head about the support. This can prevent the head rotating so fast about the support that damage occurs to any part of the vertical axis wind turbine.

Other aspects and features of the present invention will become apparent to those ordinarily skilled in the art upon review of the following description of specific embodiments of the invention in conjunction with the accompanying figures.
Figure 1 is a side view of a vertical axis wind turbine.
Figure 2 is a bird's eye view of the vertical axis wind turbine.
Figure 3 is a bird's eye view of the vertical axis wind turbine having rotated 30 degrees from the position illustrated in Figure 2.
Figure 4 is a bird's eye view of the vertical axis wind turbine having rotated 45 degrees from the position illustrated in Figure 2.
Figure 5 is a bird's eye view of the vertical axis wind turbine having rotated 60 degrees from the position illustrated in Figure 2.
Figure 6 is a bird's eye view of the vertical axis wind turbine having rotated 90 degrees from the position illustrated in Figure 2.
Figures 7 to 9 show alternative blade, arm and mounting configurations.
Figure 10 is a side view of a vertical axis wind turbine including the alternative blade and arm configuration of Figure 7.
Figure 11 is a side view of the end of an arm of a vertical axis wind turbine including a blade frame and covering.
Figure 12 is a side view of the end of an arm of another vertical axis wind turbine including a blade frame and covering.

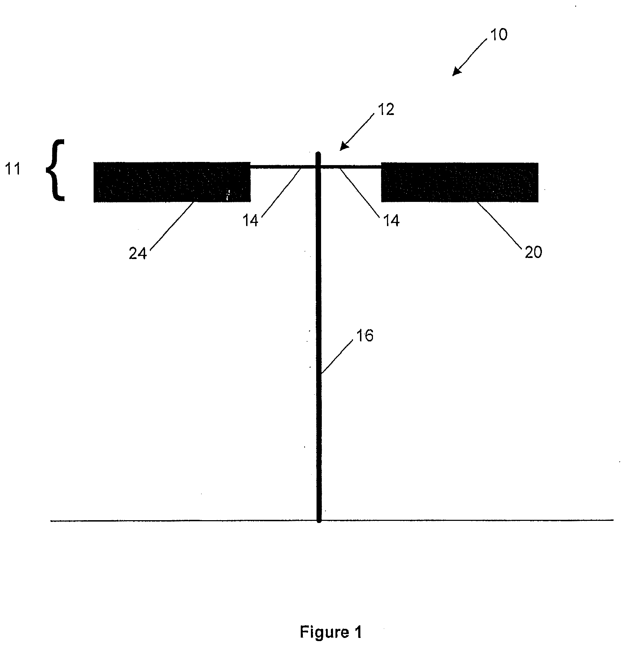

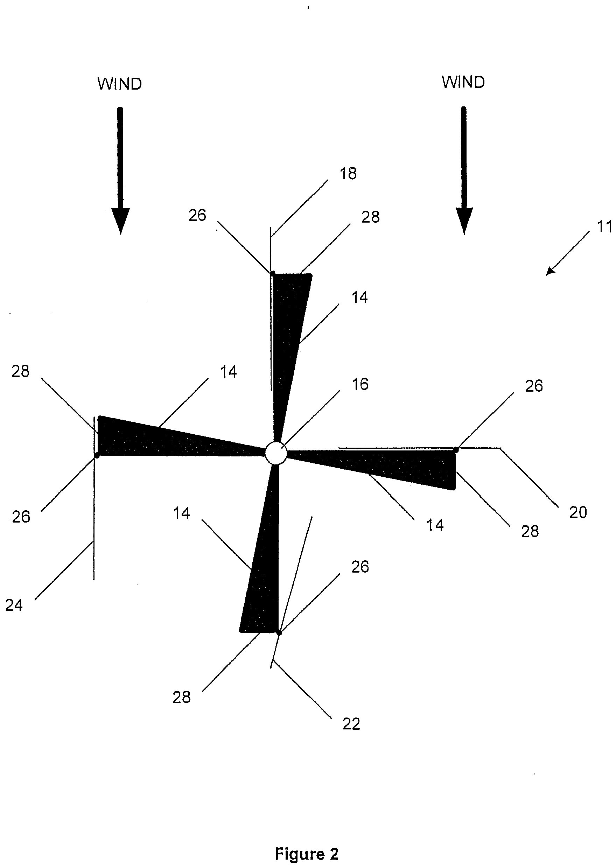

Figures 1 and 2 illustrate a wind turbine 10 including a turbine head 11 and a support 16. The turbine head 11 comprises a rotatable member 12, including four arms 14, rotatably mounted on the support 16. Each of the arms 14 is provided with a blade 18, 20, 22, 24 at the end of the arm 14 furthest from the support 16. The blade 18, 20, 22, 24 is attached to the arm 14 at a mounting point 26 about which the blade 18, 20, 22, 24 can pivot. The axis for the pivot for each blade 18, 20, 22, 24 can be in a substantially vertical orientation.

The mounting point is located along the length of the blade 18, 24 such that the distance between one end of the blade 18, 24 and the mounting point is greater than the distance between the other end of the blade 18, 24 and the mounting point. In the turbine head 11 of the present embodiment, when the arm 14 and the blade 18, 24 are coplanar the length of the blade extending between the mounting point and the support 16 is greater than the length of the blade 18, 24 extending past the end of the arm 14. The difference in length between the length of blade extending between the mounting point and the support and the length of blade extending past the end of the arm is selected such that the turbine head operates in an efficient manner. Such configuration of the difference in length is discussed further below.

Rotatably mounting the blade upon the rotatable member in such a way means that when the blade experiences a fluid flow acting against it in a first direction the blade may be caused to rotate about that mounting by inequality of the forces on the blade either side of the site at which it is mounted to the rotatable member so that it tends to become parallel to the direction of the force, unless rotation of the blade about that mounting is limited by some means. This means that the blade may be moved by the fluid flow between a first position and a second position due to the action of the fluid flow on the blade. Conveniently, in the first position the blade is generally radial to the axis of rotation of the rotatable member. Conveniently in the second position the blade is generally tangential to the axis of rotation of the rotatable member. Conveniently, if the rotatable member rotates in a first sense (clockwise or anti-clockwise) the blade is restrained from moving further than the second position in that sense of rotation and from moving further than the first position in the opposite sense of rotation. In this configuration, the blade can be influenced by fluid flow acting upon it in a direction having a component perpendicular to the axis of rotation of the rotatable member to act in the following way:
1. When the blade is upstream of the axis of rotation of the rotatable member it can be caused to adopt the first position, and since it is restrained from further motion away from the second position it can impart a torque on the rotatable member until it approaches a position downstream of the axis of rotation.
2. When the blade is downstream of the axis of rotation of the rotatable member it can be caused to move toward the second position, and since it is restrained from further motion away from the first position it can impart a torque on the rotatable member until it approaches a position in which it is broadly parallel with the flow.
3. As the blade is moved further towards a position upstream of the axis of rotation of the rotatable member it can be caused to move toward the first position, remaining broadly parallel with the flow, and since it is broadly parallel with the flow it can impart substantially no torque on the rotatable member at this part of the cycle.
Preferably the first and second positions are separated by between 110 and 70 degrees, and most preferably by about 90 degrees of rotation about the blade mounting. Preferably each blade is mounted in like fashion.

The action of the turbine head 11 in the presence of wind will now be described with reference to Figures 2 to 6. When the wind blows in a direction as illustrated in Figure 2 a force is exerted on the blade 20 which is perpendicular to the wind direction.

As the part of the blade 20 which extends from the mounting point 26 towards the support 16 is greater than the part of the blade 20 extending past the end of the arm 14, the overall force experienced by the blade 20 is a rotational force about the mounting point 26 in an anti-clockwise direction. Thus, rotational movement of the blade about the mounting point is prevented by the arm 14 which partially overlaps with the blade 20.

The overall force about the support 16 due to the action of the wind on the blade 20 and the arm 14 is a clockwise rotational force about the support 16.

Blade 24, which is at 90° to the direction of the wind due to the force of the wind acting on it causing it to pivot about the in a clockwise direction about the mounting point 26. This is because the length of the blade 24 extending between the mounting point 26 and the support 16 is greater than the length of the blade 24 extending past the end of the arm 14. Hence, a greater force is exerted by the wind on the portion of the blade 24 extending between the mounting point 26 and the support 16 than on the portion of the blade 24 extending past the end of the arm and the blade 24 rotates in a clockwise direction.

A stop member 28 is provided to prevent the blade 24 rotating more than ninety degrees. The rotation of the blade 24 to a position parallel with the wind direction means that the blade 24 has a minimal amount of force exerted on it by the wind. Therefore, the amount of anti-clockwise rotational force about the support from the wind acting on the blade 24 and its associated arm is less than the clockwise rotational force exerted by blade arm 20 and its associated arm.

Blades 18 and 22 and their associated arms are parallel to the direction of the wind and therefore exert no rotational force about the support. Thus, an overall clockwise rotational force is experienced by the turbine head 11 resulting in a clockwise rotation of the arms and blades.

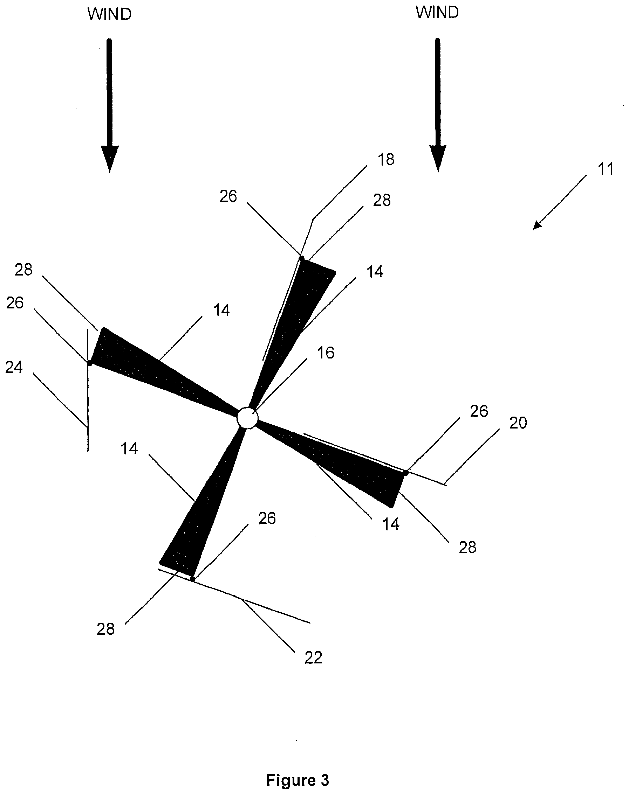

Figure 3 illustrates the positions of the blades 18, 20, 22, 24 of the wind turbine 10 when the turbine head 11 has rotated approximately 30 degrees in a clockwise direction. In this position, the wind is exerting a force on blade 18. Rotation of the blade 18 about the mounting point 26 is prevented by the arm 14 contacting the part of the blade 24 which extends between the mounting point 26 and the support for the same reasons as those given with reference to blade 20 when describing Figure 2. Thus, blade 18 and its associated arm 14 experience a clockwise rotational force about the support 16.

Blade 20 still experiences an anticlockwise force about the mounting point 26 but rotation of blade 20 is prevented by the arm 14 as described with reference to Figure 2. Thus, the combination of the blade 20 and its associated arm 14 experiences an overall clockwise rotational force about the support 16 for the same reasons given with reference to blade 20 and Figure 2.

As the turbine head 11 moves from the position in Figure 2 to that in Figure 3 blade 22 rotates in a clockwise direction about the mounting point 26. This is because the surface area of the part of the blade 22 which extends from the mounting point 26 towards the support 16 is greater than the surface area of the part of the blade 22 that extends past the end of the arm 14. Thus, the blade 22 experiences a larger force on the part of the blade 22 which extends the greater distance from the mounting point 26 than the part of the blade which extends the lesser distance from the mounting point 26. Hence, the overall force experienced by the blade 22 is clockwise and the blade 22 rotates in a clockwise direction about the mounting point 26.

As detailed above, the blade 22 experiences a larger force on the part of the blade 22 which extends the greater distance from the mounting point 26 than the lesser force on part of the blade which extends the lesser distance from the mounting point 26. However, the difference between the larger force and the lesser force on the parts of the blade 22 only needs to be sufficient to cause the rotating force about the mounting point 26. Therefore the mounting point 26 can be located as close to the centre point of the blade 22 as possible whilst still providing the required difference in force needed to rotate the blade 22. The exact position of the mounting point 26 along the length of blade 22 will be dependent on, for example, the frictional forces that need to be overcome in the rotational mounting. Ideally, the mounting is located no less than one-quarter of the length of the blade 22 from the end of the blade.

In an exemplary configuration each blade is 600mm long by 600mm wide. The rotational mounting is located 100mm from the centre line of the blade, or alternatively 200mm from one edge. In such a configuration the rotational mounting is one-sixth of the length of the blade away from the centre line of the blade. Such a configuration gives sufficient force to move the blade from one position to the other, whilst avoiding a large shock when operating at operational speed. The centre point of the blade is determined by reference to its area exposed to the fluid flow, not its mass.

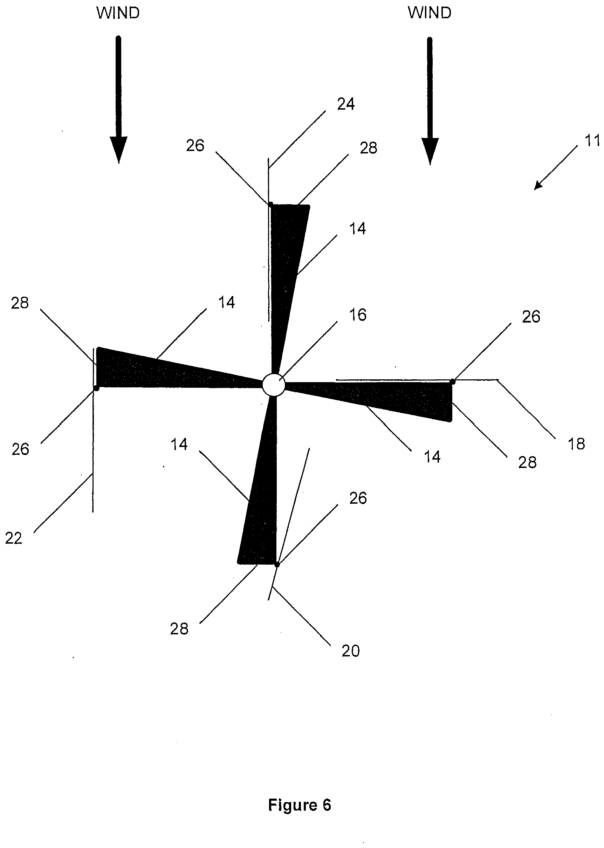

Clockwise rotation of the blade 22 due to the force of the wind is limited by a stop member 28. The stop member 28 is a face formed by an extension from the arm 14. As can be seen in Figure 3, the stop member prevents rotation of the blade 22 when it is still experiencing an overall clockwise force due to the wind. Preferably, the shape of the blade 22 and its associated arm 14 is such that the clockwise force on the blade 22 is greater than the anti-clockwise force on the arm 14. Thus, the overall force experienced by the blade 22 and its associated arm 14 is in a clockwise direction. By minimizing or substantially minimizing the rotational force experienced on blade 22 during the transition from the position in Figure 2 to the position in Figure 3, the shock experienced when the blade reaches the stop 28 can also be reduced. Such a reduction in this shock will provide for a smoother rotation of the turbine head 11. The reduction will also reduce the chances of damage due to the blade 22 swinging around with too much speed. Indeed, it has been observed that when the turbine head 11 approaches operational rotational speed, the blade 22 no longer contacts, or contacts very lightly, with the stop 28 when undergoing the rotation described above. With reference to Figures 2 and 3, this can be explained by stop 28 travelling away from blade 22 as blade 22 rotates. Therefore increasing the distance that blade 22 needs to rotate such that blade 22 does not contact stop 28 before approaching the position of blade 22 indicated in Figure 6.

Thus, in the turbine illustrated in the figures, the blades can rotate about a common primary axis 16, and each blade can rotate about a respective secondary axis 26. The secondary axes themselves rotate about axis 16 as the head of the turbine rotates. By locating the axes 26 so that when each blades rotate about the respective axis 26 the forces that exert a moment acting on it about that axis are almost balanced, the moment will be small and the blade will rotate more slowly and less vigorously about that axis than it would if the forces were highly unbalanced. Since the rotation is relatively slow, the head will have rotated somewhat before the blade hits its end-stop or other limiting means, with the result that the end-stop is moving in somewhat the same direction as the proximate part of the blade at the time the two come together; this can reduce the impact between the two. Also, since the rotation is relatively non-vigorous, the force at that impact can be relatively small. Blade 24 experiences an overall clockwise rotational force about its mounting point 26. This is for the same reasons as given in the description of Figure 2 with reference to blade 24. The clockwise rotational force causes the blade 24 to pivot about the mounting point 26 until there is the minimum amount of force exerted upon it, i.e. until it is parallel with the direction of the wind as illustrated in Figure 3.

As the total clockwise rotational force exerted on the turbine head 11 about the support is greater than the anticlockwise rotational force, the turbine head 11 continues to rotate about the support 16 in a clockwise direction.

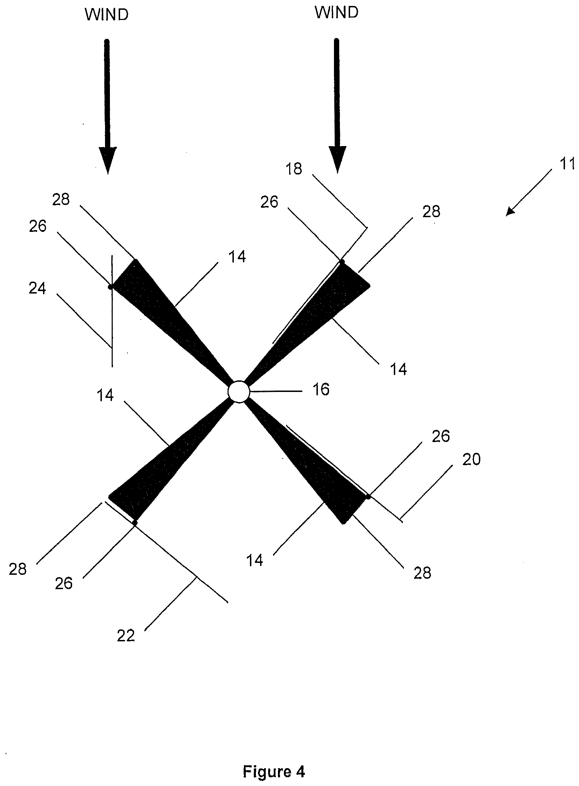

When the turbine head 11 has rotated 45 degrees, as illustrated in Figure 4, the wind continues to exert a clockwise rotational force on blades 18 and 20 and their associated arms 14 for the same reasons given with reference to Figure 3.

Blade 22 continues to experience an overall clockwise force. As discussed with reference to Figure 2, clockwise rotation of blade 22 is prevented by stop member 28 and an overall clockwise rotational force is exerted on blade 22 and its associated arm 14 about the support. Blade 24 continues to rotate in an anti-clockwise direction to remain parallel to the direction of the wind. This is due to the action of the force of the wind on blade 24, as discussed with reference to Figure 2.

Thus, as the total clockwise rotational force exerted on the turbine head 11 about the support is greater than the anticlockwise rotational force, the turbine head 11 continues to rotate about the support in a clockwise direction.

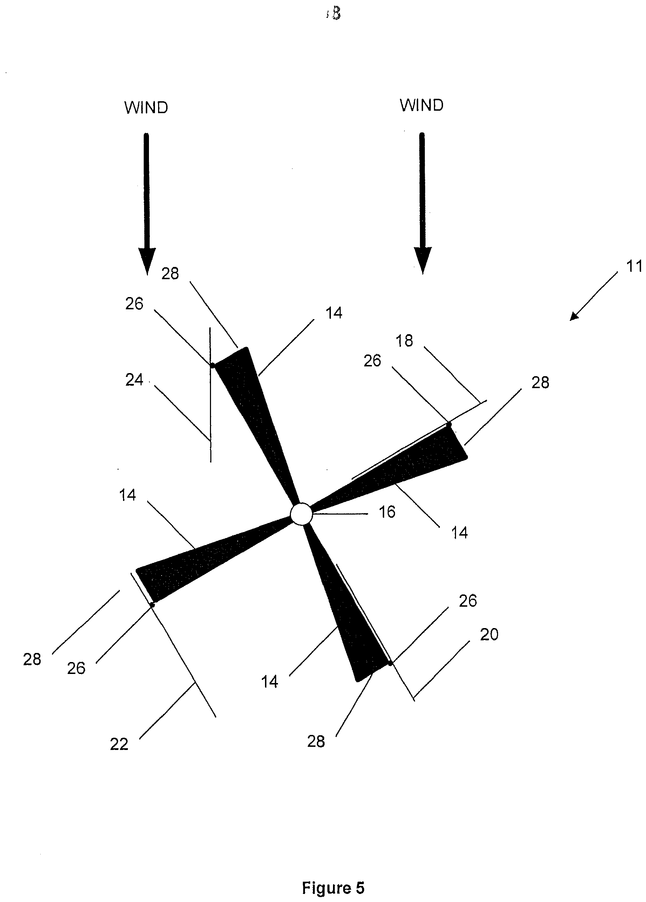

When turbine head 11 has rotated 60 degrees, as illustrated in Figure 5, the wind continues to exert a clockwise rotational force on blades 18 and 20 and their associated arms, as discussed with reference to Figure 3.

Blade 22 continues to experience a clockwise force. Clockwise rotation of blade 22 is prevented by stop member 28 and an overall clockwise rotational force is exerted on blade 22 and its associated arm 14 about the support for the same reasons given with reference to blade 22 in the discussion of Figure 3. The force of the wind acting on blade 24 continues to cause blade 24 to rotate in an anticlockwise direction to remain oriented parallel to the direction of the wind as discussed with reference blade 24 in the description of Figure 3.

Thus, as the total clockwise rotational force exerted on the turbine head 11 about the support is greater than the anticlockwise rotational force, the turbine head 11 continues to rotate about the support 16 in a clockwise direction.

When the turbine head 11 has rotated 90 degrees, to the position illustrated in Figure 6, blade 18 is in the position of blade 20 in Figure 2, blade 20 is in the position of blade 22 in Figure 2, blade 22 is in the position of blade 24 in Figure 2 and blade 24 is in the position of blade 18 in Figure 2. Thus, it can be seen that the forces exerted upon blades 18, 20, 22 and 24 in Figure 6 are the same as those exerted on blades 20, 22, 24 and 18 respectively in Figure 2. Thus the turbine head 11 continues to experience an overall clockwise rotational force about the support.

The turbine head 11 may be connected in any suitable way to a device for generating electricity. Any device capable of generating electricity from rotational movement may be used. For example, the head of the turbine may be connected to a drive shaft which rotates facilitating the generation of electricity.

As will be understood by the skilled person the wind turbine may be provided with any number of blades. Advantageously, the wind turbine is provided with a minimum of 3 blades. Such a configuration allows for the self-starting of the wind turbine. Additionally, only a subset of the arms may be provided with pivotable 20 blades. Most preferably the turbine has only three blades, which are equally spaced apart radially.

In order to be most effective, the rotating mass of the wind turbine, particularly the arms and blades, should be as light as possible. This makes it easier for the turbine to start to rotate in a light wind, reduces shock on the structure as the blades hit their stops, minimises centrifugal effects on the structure which may otherwise require the structure to be reinforced to cope with high wind speeds, and allows the turbine to recover energy more efficiently in conditions when the wind speed is not constant and so the head is desired to accelerate and decelerate in sensitive response to changes in the wind in order to best convert the wind energy into torque on the head. In such a configuration, the wind turbine is suitable for producing the torque required to drive an electricity generating system in wind speeds of greater than 5ms⁻¹ or greater than 10ms⁻¹, and preferably in wind speeds near 5ms⁻¹. In such a configuration, the wind turbine may be capable of generating, for instance, 3 to 4 Nm of torque at a wind speed of 5ms⁻¹. Testing on turbines of the type described herein suggests that they may be especially advantageous for generation of electricity in such modest wind speeds.

The support may be any conventional type of support. For example, the support may be a pole upon which the rotatable member is mounted.

The skilled person will understand that the blades may be of any suitable shape so that rotation of the blades about their mounting on the arm can be caused by the force of the wind acting on the blades. Additionally but with reference to the above discussion on the position of the mount, the mounting point of the blades on the arm may be at any suitable position such that when a blade is perpendicular to the direction of the wind the force on the blade extending on one side of the mounting point is greater than the force on the other side of the mounting point.

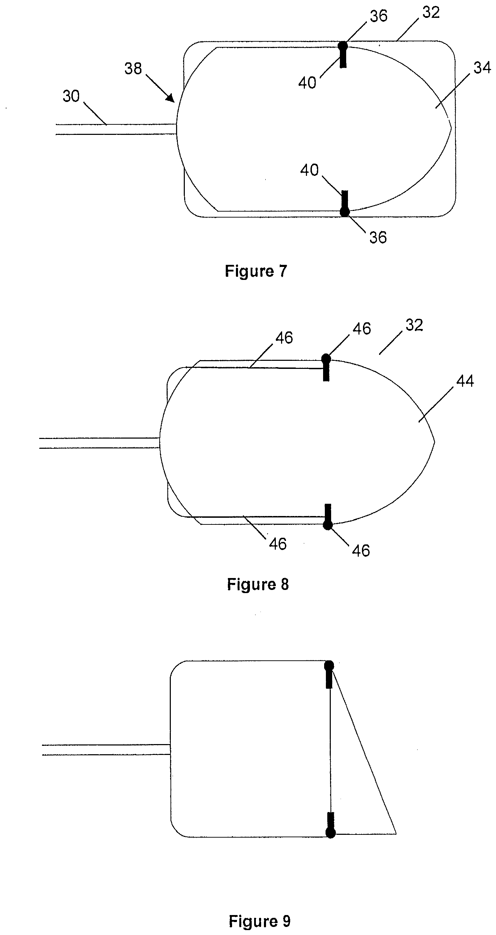

Examples of possible shapes and mounting configurations of the blades and arms are illustrated in Figures 7 to 9 and 11 to 12. In Figure 7 the arm 14 comprises an elongate portion 30 from the support (not shown) and a frame portion 32. The blade 34 comprises a planar sheet which is mounted within the frame portion 32 at two mounting points 36 about which the blade 34 can pivot. The mounting points 36 are located closer to one end of the frame portion 32 than the other so that when wind blows into or out of the page the blade 34 experiences a greater force on one side of the mounting point 36 than the other 32, causing the blade 34 to rotate until it comes into contact with a stop member 38, 40.

In Figure 7 the blade overlaps with the end of the frame portion 32 closest to the elongate portion 30 to limit movement of the blade 34. Additionally, the mounting points have extensions 40 which prevent the blade from rotating more than ninety degrees from the plane of the frame portion 32. Optionally, the extensions 40 may connect to form a single stop member that extends between the mounting points 36.

Although Figure 7 illustrates the mounting points 36 over half the length of the frame portion 32 away from the elongate portion 30 the skilled person will understand that the mounting points 36 may be situated any suitable distance from the elongate portion to effect the rotational movement of the blade 34 in response to the wind. Additionally, the stop members 38 and 40 may be located at any suitable position with the blade 34 overlapping the frame portion 32 at any suitable position and an extension from the frame portion 34 being from any suitable position.

In Figure 8 the arm comprises two arms 42 with the blade 44 having separate mounting points 46 on each of the arms 46. The mounting points 46 may be located closer to one end of the blade 44 than the other so that when a wind blows into or out of the page the blade 44 experiences a greater force on one side of the mounting points 46 than the other, causing the blade 44 to rotate until it comes into contact with a stop member. In this instance the arms form may form a first stop member and extensions, such as those described with reference to Figure 7 may form second stop members.

Figure 9 illustrates an alternative blade shape mounted between the two arm configuration 15 described with reference to Figure 8.

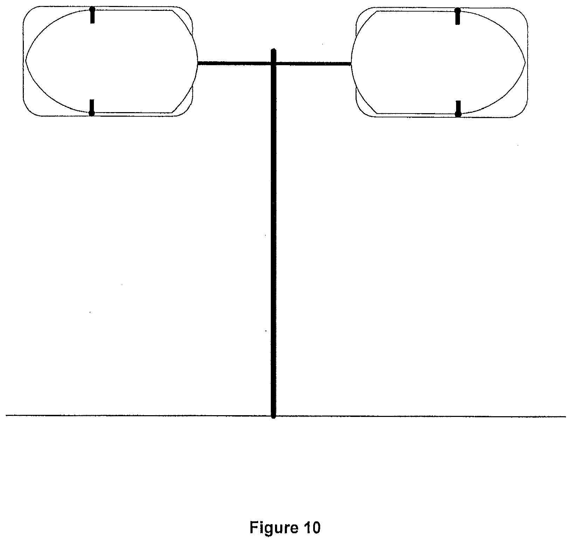

Figure 10 illustrates the alternative blade shape and arm configuration of Figure 7 mounted upon a vertical axis wind turbine.

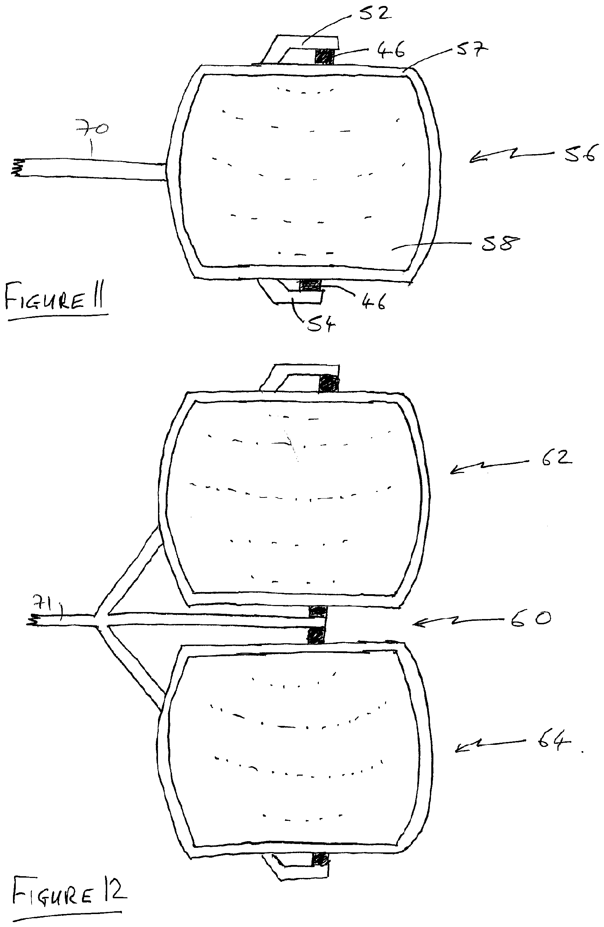

Figure 11 shows a blade 56 mounted on an arm 70. The arm terminates in a bifurcated structure having stanchions 52, 54 which extend to points above and below the blade. The blade is mounted to the stanchions by bearings 46. The blade comprises a frame 57 and a web of flexible impermeable material 58 which is attached at its periphery to the frame 57. The upper edges of the frame 57 are straight and parallel with each other. The lateral edges of the frame 57 are curved.

In alternative configuration, each arm has a blade mounted above and below the arm. Such a configuration doubles the surface area of the turbine without increasing the number of arms required. This configuration also allows for a doubling of the number of blades without the consequence of the blades further shielding each other, which would be the case if more blades were deployed on a single side of the arms. Such a structure with blades and arms of a design broadly analogous to those of figure 11 is shown in figure 12. The structure 60 comprises an arm 71 having blades 62, 64 mounted above and below it.

As discussed previously but with reference to the above discussion on the position of the mount, the mounting point of a blade may be at any suitable position such that, when a blade is perpendicular to the direction of the wind, the force on the blade extending on one side of the mounting point is greater than the force on the other side of the mounting point.

Optionally, the blade may be mounted such that it pivots about a substantially horizontal axis. A blade mounted in this way rotates between a position where a face of the blade is situated so that the wind is directed into the face of the blade and a position where the wind is directed across the face of the blade.

A blade may also be provided with biasing means to encourage it to return to a position where its face is situated such that the direction of the wind is into the face of the blade.

Each blade is of laminar form. Each blade can thus take the form of a sheet, optionally with other features such as a strengthening frame or rib. Most conveniently the blade comprises a frame with a sheet of material attached across it. The blade may be planar or substantially planar. Preferably the blade is configured so as to be of a non-aerofoil shape. The blades can be substantially flat and planar. In this configuration the two sides of the blade coplanar with the axis of rotation are parallel, or substantially parallel, with each other. Additionally, the blade may be any suitable shape enabling them to carry out the functionality described above other examples of suitable shapes not shown in the Figures include a blade with a scoop on one side of the mounting point to increase the force felt on that side of the mounting point. The blades may also be rigid or flexible in shape and may be made from any suitable material. Examples of material include, plastic, material such as sail cloth, carbon fibre or metal. The metal may be, for example aluminium or steel.

Advantageously, the blades may also be constructed with a blade frame and a covering. The covering including materials such as sail cloth, kite-material such as rip-stop nylon, or other flexible material. The face of the blade will then be able to change shape when a force is applied to it, and therefore have a concave shape. Such a concave shape for the blade could provide better ability to catch the wind. Furthermore, the covering can be made of a relatively inexpensive material. This provides the advantage that the covering can be made to automatically release if the wind conditions are adverse, for example during gale force winds. The covering can then be replaced without the whole wind turbine being damaged by the adverse conditions.

Thus, in one embodiment, one or more of the blades comprises a peripheral structure defining a frame having an aperture therein and a web of flexible material disposed over the aperture and attached to the frame. The flexible material is preferably impermeable so that the wind can act on it. In this way, when the wind acts on the flexible material it can cause it to adopt a non-planar shape, for example by bowing into the aperture. This non-planar shape can enhance efficiency by catching the wind and/or by acting as a sail. One convenient way to achieve such a structure is for the frame to be formed of one or more thin struts which circumscribe the aperture and for the flexible material to be attached to that frame by adhesive, staples or another fixing means.

The stop member 28, 36, 46 may be a face formed on an extension from the arm 14 as shown in Figures 2 to 6. Alternatively, any of the stop members illustrated in and described with reference to Figures 7 and 8 may be used. The skilled person will also understand that any other suitable means of restraining the movement of the blades may be used. For example, alternative stop members include a tether connecting the blade to a fixed point.

Additionally, the stop member may not limit the rotation of the blade to 90 degrees but may be maximised with the opposing rotational forces minimised. This angle will be less than 180 degrees.

Optionally, the mounting point of each blade may be a spring loaded mechanism to prevent sudden movement of the blades impacting on the rotational movement of the blade and arms. Alternatively, the stop member 28 may be configured to prevent sudden movement of the blades impacting on the rotational movement of the blade and arms. For example, the stop member 28 may be made from a resilient material such as rubber.

Optionally, the vertical axis wind turbine may be provided with a centrifugally operated declutching device. This device may comprise a means to fix a blade in a position so that it acts to slow the rotation of the turbine head about the support. Any suitable means for fixing the position of the blade may be used. Alternatively, the device may comprise braking means to apply a braking force to decelerate the turbine head. Any suitable means for decelerating the rotation of the turbine head about the support may be used.

The device may be activated when the centrifugal force experienced at a point on the vane is greater than a threshold amount. Alternatively, the device may be activated when the rotational velocity of the turbine head is greater than a threshold amount. When the device is means to fix a blade and the rotational velocity or centrifugal force is greater than the threshold amount the device may cause one blade to be fixed; then, if the speed of centrifugal force becomes greater than the threshold amount for the device a second time the device may cause a second blade to be fixed.

Preferably, the blades are freed from their fixed position, or the braking force is reduced, when the centrifugal force, or rotational velocity falls below a second threshold amount.

The turbine may be coupled so as to drive a consumer of torque such as an electricity generator or a water pump, or to a mechanism that converts the turbine's rotating motion into motion of another form, such as reciprocating motion.

The presence of such a device is useful as it prevents the rotational velocity of the turbine head increasing to a point where damage may occur to one or more of the blades, the turbine head, the support or the means used to generate electrical energy from the rotational movement of the turbine head.

## Claims

1. A turbine head (11) comprising:
a rotatable member (12);
a plurality of blades (18, 20, 22, 24) each including a surface, the blades (18, 20, 22, 24) being rotatably mounted to the rotatable member (12) such that the blades (18, 20, 22, 24) can each rotate relative to the rotatable member (12) from a first position to a second position, the angle between the first and second positions is between 75 and 105 degrees, wherein each blade is laminar and in the first position the blades are generally radial to the axis of rotation of the rotatable member, and **characterised in that**:
the axis for the pivot for each blade is in a substantially vertical orientation;
in the second position the blades are generally tangential to the axis of rotation of the rotatable member; and
each blade is rotatably mounted to the rotatable member (12) about an axis (26) that is near the centre of the blade such that, if a force is applied to the blade in a direction that Is perpendicular to the surface, the difference in force between the force exerted on a portion of the surface on one side of the axis (26) and the force exerted on a portion of the surface extending to the other side of the axis (26) is sufficient to cause the blade to rotate from the first position towards the second position.

2. A turbine head as claimed in claim 1, wherein the surface area of the portion of the surface of the blade on one side of the axis (26) is greater than the surface area of the surface on the other side of the axis.

3. A turbine head as claimed in any preceding claim, wherein each blade is rotatably mounted at a point between the centre of the blade and a point one-quarter of the length of the blade in from the end of the blade.

4. A turbine head as claimed in any preceding claim, wherein each blade is rotatably mounted at a point one-sixth of the length of the blade from the centre of the blade.

5. A turbine head as claimed in any preceding claim, wherein each blade comprises a blade frame (32) and a blade covering, the blade frame (32) forming the outer edges of the blade and the covering forming the surface of each blade.

6. A turbine head as claimed in claim 5, wherein the blade covering comprises a flexible material.

7. A turbine head as claimed in any preceding claim wherein the angle between the first and second positions is between seventy five and one hundred and five degrees.

8. A turbine head as claimed in any preceding claim further comprising a first stop means (28) for each of the blades, wherein the first stop means (28) limits the degree of rotation of the blade and preferably a second stop means for each of the blades, wherein the second stop means further limit the degree of rotation of the blade.

9. A turbine head as claimed in claim 8 wherein the stop means is: a projection extending from the rotatable member; a tether between a fixed point and a point on the blade; or a part of the rotatable member.

10. A turbine head as claimed in any preceding claim wherein the rotatable member (12) includes a plurality of turbine vanes and at least one of each of the plurality of blades is mounted to a respective one of the turbine vanes.

11. A turbine head as claimed in claim 10 wherein the turbine vanes include an elongate portion (30; 70; 71) and a frame portion (32) at one end of the elongate portion, the blade mounted within the frame portion.

12. A turbine head as claimed in claim 10 or 11 wherein the turbine vanes include a pair of arms (52, 54) the blade being mounted at one point to one arm of the pair of arms (52, 54) and at another point to the other arm of the pair of arms (52. 54).

13. A turbine head as claimed in any preceding claim wherein each blade is mounted at an asymmetric point along the width of the blade.

14. A vertical axis wind turbine including a turbine head rotatably mounted upon a support (16), the turbine head as claimed in any one of Claims 1 to 13.

15. A vertical axis wind turbine as claimed in Claim 14 further comprising a braking means to limit the speed of rotation of the turbine head about the support.

## Patentansprüche

1. Turbinenkopf (11), umfassend:
ein drehbares Element (12);
eine Vielzahl von Schaufeln (18, 20, 22, 24), die jeweils eine Oberfläche aufweisen, wobei die Schaufeln (18, 20, 22, 24) drehbar an dem drehbaren Element (12) gelagert sind, sodass sich die Schaufeln (18, 20, 22, 24) jeweils relativ zu dem drehbaren Element (12) von einer ersten Position in eine zweite Position drehen können, und der Winkel zwischen der ersten und der zweiten Position zwischen 75 und 105 Grad beträgt, wobei jede Schaufel laminar ist und die Schaufeln in der ersten Position im Allgemeinen radial zur Drehachse des drehbaren Elements angeordnet sind, **dadurch gekennzeichnet, dass**:
die Achse für den Drehpunkt für jede Schaufel in einer im Wesentlichen vertikalen Ausrichtung angeordnet ist;
die Schaufeln in der zweiten Position im Allgemeinen tangential zur Drehachse des drehbaren Elements angeordnet sind; und
jede Schaufel drehbar an dem drehbaren Element (12) um eine Achse (26) gelagert ist, die nahe der Mitte der Schaufel liegt, sodass, wenn eine Kraft auf die Schaufel in einer Richtung ausgeübt wird, die senkrecht zur Oberfläche ist, die Kraftdifferenz zwischen der Kraft, die auf einen Abschnitt der Oberfläche auf einer Seite der Achse (26) ausgeübt wird, und der Kraft, die auf einen Abschnitt der Oberfläche ausgeübt wird, der sich auf der anderen Seite der Achse (26) erstreckt, ausreichend ist, um die Drehung der Schaufel von der ersten Position in Richtung der zweiten Position zu veranlassen.

2. Turbinenkopf nach Anspruch 1, wobei der Oberflächenbereich des Abschnitts der Oberfläche der Schaufel auf einer Seite der Achse (26) größer ist als der Oberflächenbereich der Oberfläche auf der anderen Seite der Achse.

3. Turbinenkopf nach einem beliebigen der vorhergehenden Ansprüche, bei dem jede Schaufel an einem Punkt zwischen der Mitte der Schaufel und einem Punkt, der ein Viertel der Länge der Schaufel vom Ende der Schaufel entfernt ist, drehbar gelagert ist.

4. Turbinenkopf nach einem beliebigen der vorhergehenden Ansprüche, wobei jede Schaufel an einem Punkt, der der ein Sechstel der Länge der Schaufel von der Mitte der Schaufel entfernt ist, drehbar gelagert ist.

5. Turbinenkopf nach einem beliebigen der vorhergehenden Ansprüche, wobei jede Schaufel einen Schaufelrahmen (32) und eine Schaufelabdeckung aufweist, wobei der Schaufelrahmen (32) die Außenkanten der Schaufel bildet und die Abdeckung die Oberfläche jeder Schaufel bildet.

6. Turbinenkopf nach Anspruch 5, wobei die Schaufelabdeckung ein flexibles Material aufweist.

7. Turbinenkopf nach einem beliebigen der vorhergehenden Ansprüche, wobei der Winkel zwischen der ersten und der zweiten Position zwischen 75 und 105 Grad beträgt.

8. Turbinenkopf nach einem beliebigen der vorhergehenden Ansprüche, ferner umfassend ein erstes Anschlagmittel (28) für jede der Schaufeln, wobei das erste Anschlagmittel (28) den Rotationsgrad der Schaufel begrenzt, und vorzugsweise ein zweites Anschlagmittel für jede der Schaufeln, wobei das zweite Anschlagmittel den Rotationsgrad der Schaufel weiter begrenzt.

9. Turbinenkopf nach Anspruch 8, wobei das Anschlagmittel Folgendes ist: ein Vorsprung, der sich vom drehbaren Element erstreckt; eine Leine zwischen einem festen Punkt und einem Punkt auf der Schaufel; oder ein Teil des drehbaren Elements.

10. Turbinenkopf nach einem beliebigen der vorhergehenden Ansprüche, wobei das drehbare Element (12) mehrere Turbinenschaufeln aufweist und mindestens eine der mehreren Schaufeln an jeweils einer der Turbinenschaufeln befestigt ist.

11. Turbinenkopf nach Anspruch 10, wobei die Turbinenschaufeln einen länglichen Abschnitt (30; 70; 71) und einen Rahmenabschnitt (32) an einem Ende des länglichen Abschnitts aufweisen, wobei die Schaufel innerhalb des Rahmenabschnitts befestigt ist.

12. Turbinenkopf nach Anspruch 10 oder 11, wobei die Turbinenschaufeln ein Paar von Armen (52, 54) aufweisen, wobei die Schaufel an einem Punkt an einem Arm des Armpaares (52, 54) und an einem anderen Punkt an dem Arm des anderen Paars von Armen (52, 54) befestigt ist.

13. Turbinenkopf nach einem beliebigen der vorhergehenden Ansprüche, wobei jede Schaufel an einem asymmetrischen Punkt entlang der Breite der Schaufel befestigt ist.

14. Windturbine mit vertikaler Achse, die einen Turbinenkopf umfasst, der drehbar auf einem Träger (16) gelagert ist, wobei der Turbinenkopf nach einem beliebigen der Ansprüche 1 bis 13 beansprucht ist.

15. Windturbine mit vertikaler Achse nach Anspruch 14, ferner umfassend ein Bremsmittel zum Begrenzen der Drehzahl des Turbinenkopfes um den Träger.

## Revendications

1. Tête de turbine (11) comprenant :
un élément rotatif (12) ;
une pluralité de pales (18, 20, 22, 24) comprenant chacune une surface, les pales (18, 20, 22, 24) étant montées de manière rotative sur l'élément rotatif (12) de telle sorte que les pales (18, 20, 22, 24) peuvent chacune tourner par rapport à l'élément rotatif (12) d'une première position à une seconde position, l'angle entre les première et
seconde positions est compris entre 75 et 105 degrés, dans lequel chaque pale est laminaire et dans la première position, les pales sont généralement radiales par rapport à l'axe de rotation de l'élément rotatif, et **caractérisées en ce que** :
l'axe de pivotement de chaque pale est dans une orientation sensiblement verticale ;
dans la seconde position, les pales sont généralement tangentielles à l'axe de rotation de l'élément rotatif ; et
chaque pale est montée de manière rotative sur l'élément rotatif (12) autour d'un axe (26) situé près du centre de la pale de telle sorte que, si une force est appliquée à la pale dans une direction perpendiculaire à la surface, la différence de force entre la force exercée sur une partie de la surface d'un côté de l'axe (26) et la force exercée sur une partie de la surface s'étendant de l'autre côté de l'axe (26) est suffisante pour provoquer la rotation de la pale la première position vers la seconde position.

2. Tête de turbine telle que revendiquée dans la revendication 1, dans laquelle la zone superficielle de la partie de la surface de la pale d'un côté de l'axe (26) est supérieure à la zone superficielle de la surface de l'autre côté de l'axe.

3. Tête de turbine telle que revendiquée dans l'une quelconque des revendications précédentes, dans laquelle chaque pale est montée de manière rotative en un point situé entre le centre de la pale et un point situé au quart de la longueur de la pale à partir de l'extrémité de la pale.

4. Tête de turbine telle que revendiquée dans l'une quelconque des revendications précédentes, dans laquelle chaque pale est montée de manière rotative en un point situé à un sixième de la longueur de la pale à partir du centre de la pale.

5. Tête de turbine telle que revendiquée dans l'une quelconque des revendications précédentes, dans laquelle chaque pale comprend une structure de pale (32) et un revêtement de pale, la structure de pale (32) formant les bords extérieurs de la pale et le revêtement formant la surface de chaque pale.

6. Tête de turbine telle que revendiquée dans la revendication 5, dans laquelle le revêtement de pale comprend un matériau flexible.

7. Tête de turbine telle que revendiquée dans l'une quelconque des revendications précédentes, dans laquelle l'angle entre les première et seconde positions est compris entre soixante-quinze et cent cinq degrés.

8. Tête de turbine telle que revendiquée dans l'une quelconque des revendications précédentes, comprenant en outre un premier moyen d'arrêt (28) pour chacune des pales, le premier moyen d'arrêt (28) limitant le degré de rotation de la pale et, de préférence, un second moyen d'arrêt pour chacune des pales, dans laquelle le second moyen d'arrêt limite en outre le degré de rotation de la pale.

9. Tête de turbine telle que revendiquée dans la revendication 8, dans laquelle le moyen d'arrêt est : une saillie s'étendant depuis l'élément rotatif ; une attache entre un point fixe et un point sur la pale, ou une partie de l'élément rotatif.

10. Tête de turbine telle que revendiquée dans l'une quelconque des revendications précédentes, dans laquelle l'élément rotatif (12) comprend une pluralité d'aubes de turbine et au moins l'une de chacune de la pluralité de pales est montée sur l'une respective des aubes de turbine.

11. Tête de turbine telle que revendiquée dans la revendication 10, dans laquelle les aubes de turbine comprennent une partie allongée (30, 70, 71) et une partie de structure (32) à une extrémité de la partie allongée, la pale étant montée dans la partie de structure.

12. Tête de turbine telle que revendiquée dans la revendication 10 ou 11, dans laquelle les aubes de turbine comprennent une paire de bras (52, 54), la pale étant montée en un point sur l'un des bras de la paire de bras (52, 54) et en un autre point sur l'autre bras de la paire de bras (52, 54) .

13. Tête de turbine telle que revendiquée dans l'une quelconque des revendications précédentes, dans laquelle chaque pale est montée en un point asymétrique le long de la largeur de la pale.

14. Turbine éolienne à axe vertical comprenant une tête de turbine montée de manière rotative sur un support (16), la tête de turbine telle que revendiquée dans l'une quelconque des revendications 1 à 13.

15. Turbine éolienne à axe vertical telle que revendiquée dans la revendication 14, comprenant en outre un moyen de freinage pour limiter la vitesse de rotation de la tête de turbine autour du support.
